# EUROPÄISCHE PATENTANMELDUNG

(11) **EP 2 457 790 A1**
(43) Veröffentlichungstag der Anmeldung: **30.05.2012**
(21) Anmeldenummer: 10014950.9
(22) Anmeldetag: 24.11.2010
(51) Int. Cl.: B60T 17/18, B08B 9/032

(54) **Verfahren und Vorrichtung zum Reinigen von Leitungen, insbesondere von Versorgungsleitungen in Druckluftbremssystemen**

(71) Anmelder: TUNAP Industrie Chemie GmbH & Co. Produktions KG, 82515 Wolfratshausen (DE)
(72) Erfinder: Sprügel, Friedrich, 81825 München (DE); Urban, Alfons, 83670 Bad Heilbrunn (DE)
(74) Vertreter: Wagner, Bernhard Peter

(57) **Zusammenfassung**

Die vorliegende Erfindung betrifft ein Verfahren zum Reinigen von Leitungen, insbesondere von Versorgungsleitungen in Druckluft-Bremssystemen, bei dem eine Reinigungsflüssigkeit durch die zu reinigende Leitung (2) gepumpt wird, wobei der zu der zu reinigenden Leitung (2) strömenden Reinigungsflüssigkeit Luft zugeführt wird. Dieses Verfahren wird auf besonders vorteilhafte Weise mit einer Vorrichtung durchgeführt, die eine Pumpe (10) für Reinigungsflüssigkeit und einen Mischer (14) zum Einleiten von Luft in Reinigungsflüssigkeit aufweist, dessen erster Einlass (12) mit der Förderseite (11) mit der Pumpe (10) verbunden ist und dessen zweiter Einlass (15) mit einer Druckluftquelle (19) verbindbar ist, während sein Auslass (20) über eine Anschlussleitung (21) mit einer zu reinigenden Leitung (2) verbindbar ist.

## Beschreibung

Die vorliegende Erfindung betrifft ein Verfahren und eine Vorrichtung zum Reinigen von Leitungen, insbesondere von Versorgungsleitungen in Druckluftbremssystemen.

Bremssysteme in Kraftfahrzeugen, insbesondere in Lastkraftwagen und in Bussen zur Personenbeförderung unterliegen hohen Sicherheitsstandards und umfassen üblicher Weise zwei parallel Bremskreise, von denen der eine pneumatisch und der andere hydraulisch arbeitet. Aus Sicherheitsgründen ist ein LKW oder Bus erst dann fahrbereit, wenn nach dem Starten des Motors der pneumatische Bremskreis aufgeladen und betriebsbereit ist, wenn also ein für die Betätigung der pneumatischen Bremse erforderlicher Druckspeicher von einem Kompressor aufgeladen ist.

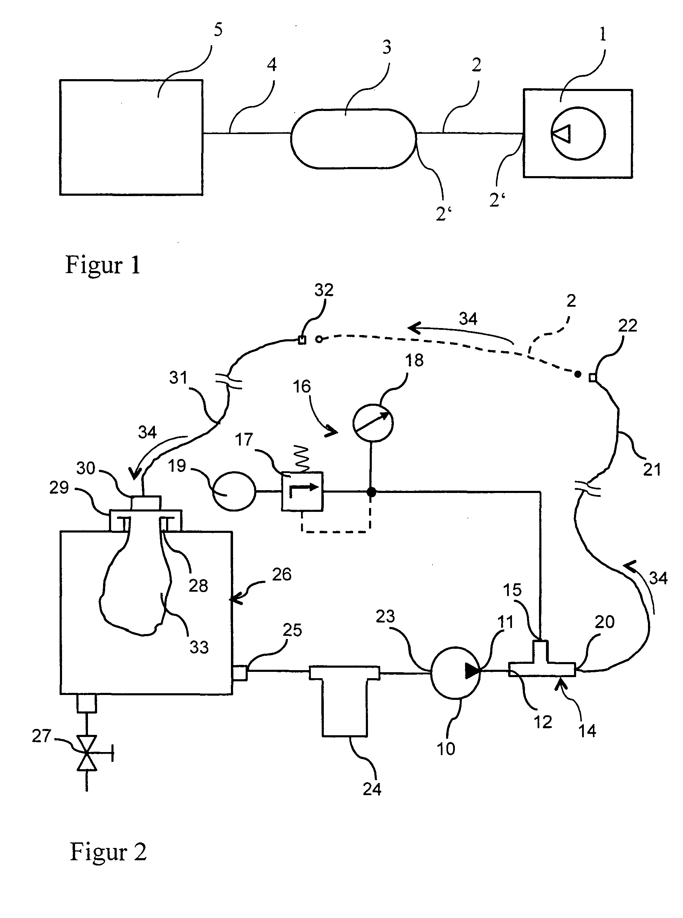

Hierfür ist der Kompressor 1, wie in Figur 1 dargestellt, über eine Leitung 2 mit einem Druckbehälter 3 verbunden, der über ein Leitungssystem 4 ein Bremssystem 5 mit Druckluft zur Betätigung der einzelnen Bremsen versorgt.

Die zur Versorgung des Druckbehälters 3 mit Druckluft vorgesehene Leitung 2, die üblicherweise aus Kupfer oder Stahl besteht, kann im Laufe der Zeit innen korrodieren und sich durch kohlenwasserstofflialtige Ablagerungen aus dem Ölnebel des Kompressors zusetzen, sodass die Ladezeit für den Druckbehälter 3 sich unnötig verlängert. Außerdem wird durch das Verengen der Leitungen der Kompressor stärker belastet und die Temperatur der verdichteten Luft in den Leitungen erhöht sich unter Umständen bis in den kritischen Bereich, so dass es möglicherweise sogar zu einer Entzündung der Ablagerungen kommen kann. Abhilfe wird hierbei üblicher Weise dadurch geschaffen, dass die Versorgungsleitungen zwischen Kompressor und Druckbehälter erneuert werden, was jedoch mit erheblichen Kosten verbunden ist. Eine Kostenersparnis könnte erzielt werden, wenn es möglich wäre, die Versorgungsleitungen zuverlässig zu reinigen.

Der Erfindung liegt daher die Aufgabe zugrunde, ein einfach zu handhabendes, werkstattgerechtes und effektives Verfahren zum Reinigen von Leitungen sowie eine entsprechende Vorrichtung bereitzustellen.

Diese Aufgabe wird erfindungsgemäß durch das Verfahren nach Anspruch 1 und die Vorrichtung nach Anspruch 8 gelöst.

Erfindungsgemäß wird also durch eine zu reinigende Leitung eine Reinigungsflüssigkeit gepumpt, der Luft zugeführt wird. Hierdurch wird erreicht, dass sich in der durch die zu reinigende Leitung strömenden Reinigungsflüssigkeit Luftblasen bilden, die die Strömung der Reinigungsflüssigkeit durch die Leitung so stören, dass es zu regelrechten Kavitationsschlägen kommt, wodurch die Verunreinigungen in der zu reinigenden Leitung nicht nur chemisch von der Reinigungsflüssigkeit gelöst, sondern auch mechanisch von den Innenwänden der zu reinigenden Leitung abgelöst werden.

Um eine besonders gute mechanische Reinigungswirkung zu erzielen, ist vorgesehen, dass die Reinigungsflüssigkeit mit einem Förderdruck von 0 bis 5 bar, vorzugsweise von 0,5 bis 2 bar durch die zu reinigende Leitung gepumpt wird. Mit einem derartigen Förderdruck lässt sich auch bei den relativ dünnen Druckluftleitungen zur Versorgung der Druckbehälter in pneumatischen Bremskreisen eine ausreichend schnelle Strömung der Reinigungsflüssigkeit erzielen, so dass die auf der Kavitation beruhende mechanische Reinigung wirksam durchgeführt wird.

Die Einleitung von Luft in die strömende Reinigungsflüssigkeit erfolgt dabei mit einem Druck von 0,5 bis 2,0 bar, vorzugsweise 0,8 bis 1,5 bar, insbesondere 0,9 bis 1,3 bar.

Bei einer vorteilhaften Ausgestaltung der Erfindung ist vorgesehen, dass am Ende eines Reinigungsbetriebs die Reinigungsflüssigkeit mit Druckluft aus der zu reinigenden Leitung geblasen wird und dass anschließend zum Spülen der zu reinigenden Leitung eine Spülflüssigkeit in im Wesentlichen gleicher Weise wie die Reinigungsflüssigkeit durch die zu reinigende Leitung gepumpt wird.

Zweckmäßigerweise wird als Reinigungsflüssigkeit eine nicht brennbare, wässrige, aschefreie Flüssigkeit verwendet, die schmutzlösende und emulgierende Eigenschaften hat. Ein langfristiger Korrosionsschutz wird durch eine anschließend zum Einsatz kommende wässrige Spülflüssigkeit erzielt. Die Verwendung unbrennbarer Reinigungsflüssigkeit hat den Vorteil, dass, falls doch etwas Reinigungsflüssigkeit nach der Reinigung in den Versorgungsleitungen verbleiben sollte, es auch dann nicht zum Verbrennen der Flüssigkeit im Bremssystem kommen kann, wenn sich die Druckluft im Bremssystem aufgrund der Kompression stark erwärmt.

Bei einer praktischen Ausgestaltung der Erfindung ist vorgesehen, dass zunächst einlass- und auslassseitige Anschlüsse der zu reinigenden Versorgungsleitung eines Druckluftbremssystems gelöst werden, dass die Anschlüsse der zu reinigenden Versorgungsleitung dann mit einer Vorlaufleitung und einer Rücklaufleitung verbunden werden, durch die dann Reinigungsflüssigkeit oder Spülflüssigkeit zu bzw. von der zu reinigenden Versorgungsleitung zugeführt bzw. abgeführt werden.

Erfindungsgemäß lässt sich die Reinigung von Versorgungsleitungen in Druckluftbremssystemen also in der Werkstatt einfach durchführen, ohne dass die Leitungen als Ganzes ausgebaut werden müssten. Es reicht vielmehr aus, nur die eingangs- und ausgangsseitigen Anschlüsse der Versorgungsleitungen zu lösen, um über Vor- bzw. Rücklaufleitungen, die zweckmäßigerweise als flexible Schläuche ausgebildet sind, eine kontinuierliche Reinigungs- oder Spülflüssigkeitsströmung über eine vorbestimmte Zeit aufrechterhalten zu können.

Bei der praktischen Durchführung des erfindungsgemäßen Verfahrens hat es sich als zweckmäßig erwiesen, wenn nach Beendigung des Reinigungs- oder gegebenenfalls des Spülbetriebs die Versorgungsleitung mit ihrem einlassseitigen Anschluss wieder an einen Kompressor des Bremssystems angeschlossen wird, während der auslassseitige Anschluss offen bleibt, um die Versorgungsleitung abschließend mit Druckluft vom Kompressor des Bremssystems zu spülen. Auf diese Weise wird sichergestellt, dass die warme Druckluft vom Kompressor zuverlässig sämtliche Reinigungs- oder Spülflüssigkeitsreste aus der Versorgungsleitung entfernt.

Auf besonders vorteilhafte Weise lässt sich das erfindungsgemäße Verfahren mit einer Vorrichtung durchführen, die eine Pumpe für Reinigungsflüssigkeit und einen Mischer zum Einleiten von Luft in die Reinigungsflüssigkeit aufweist, dessen erster Einlass mit der Förderseite der Pumpe verbunden ist und dessen zweiter Einlass mit einer Druckluftquelle verbindbar ist, während sein Auslass über eine Anschlussleitung mit einer zu reinigenden Leitung verbindbar ist. Durch den Einsatz eines Mischers zwischen Pumpe und zu reinigender Leitung lässt sich die für die mechanische Reinigungswirkung erforderliche Luft einfach und zuverlässig in die zu reinigende Leitung strömende Flüssigkeit einleiten.

Bei einer zweckmäßigen Ausgestaltung der Erfindung ist vorgesehen, dass der zweite Einlass des Mischers über einen Druckregler mit der Druckluftquelle verbindbar ist.

Um einen Kreislauf für Reinigungsflüssigkeit zu bilden, ist die Saugseite der Pumpe mit einem Auslass eines Behälters für Reinigungsflüssigkeit verbunden, dessen Einlass über eine Rücklaufleitung mit der zu reinigenden Leitung verbindbar ist.

Die Erfindung wird im Folgenden anhand eines in der Zeichnung dargestellten Ausführungsbeispiels näher erläutert. Es zeigen:
Figur 1 eine stark vereinfachte, schematische Darstellung einer Druckluftversorgung eines pneumatischen Bremssystems, und
Figur 2 eine vereinfachte, schematische Darstellung einer erfindungsgemäßen Vorrichtung zum Reinigen von Leitungen.

Wie in Figur 2 dargestellt ist, weist die erfindungsgemäße Vorrichtung zur Reinigung von Leitungen, insbesondere von Versorgungsleitungen in Druckluftbremssystemen eine Pumpe 10 auf, deren Vorderseite 11 an einen ersten Einlass 12 eines Mischers 14 angeschlossen ist. Ein zweiter Einlass 15 des Mischers 14 ist über einen Druckregler 16 mit Regelventil 17 und Manometer 18 mit einer Druckluftquelle 19 verbunden. Als Druckluftquelle 19 kann ein mobiler Kompressor oder aber insbesondere beim Einsatz der Vorrichtung in einer Werkstatt die Druckluftversorgung der Werkstatt sein.

Ein Auslass 20 des Mischers 14 ist mit einer Anschluss- oder Vorlaufleitung 21 verbunden, an deren anderem Ende ein Anschluss 22 vorgesehen ist, der mit einem der Anschüsse 2' (siehe Figur 1) einer zu reinigenden Versorgungsleitung 2 verbunden werden kann. Der Anschluss 22 ist dabei austauschbar, so dass er entsprechend den Anschlüssen 2' der zu reinigenden Leitung 2 gewählt werden kann.

Die Saugseite 23 der Pumpe 10 ist über ein Filter 24 mit einem Auslass 25 eines Behälters 26 verbunden, der zur Aufnahme von Reinigungs- oder Spülflüssigkeit dient. Der Filter 24 ist als Feinst-Filter ausgebildet, der die Pumpe 10 vor Verschleiß durch Schmutzpartikel schützt. Der Behälter 26 ist ferner mit einem Auslasshahn 27 versehen, durch den verbrauchte Reinigungs- oder Spülflüssigkeit aus dem Behälter 26 zur Entsorgung in einer Abwasseranlage mit Ölabscheider abgelassen werden kann.

Zum Befüllen des Behälters 26 mit Reinigungs- oder Spülflüssigkeit ist eine Einlassöffnung 28 vorgesehen, die zweckmäßigerweise mit einem Deckel 29 in üblicher Weise verschließbar ist. Der Deckel 29 weist einen Anschlussstutzen 30 für eine Rücklaufleitung 31 auf, an deren anderem Ende ein Anschluss 32 vorgesehen ist, der wie der Anschluss 22 der Vorlaufleitung 21 mit einem der Anschlüsse 2' einer zu reinigenden Leitung 2 verbunden werden kann.

Die Reinigungslösung auf wässriger Basis hat schmutzlösende und emulgierende Eigenschaften und bietet gleichzeitig einen entsprechenden Korrosionsschutz. Die zur Anwendung kommende Reinigungslösung besteht aus kurzkettigen Aminen, wobei mindestens eine zusätzliche Alkoholfunktion im Molekül vorhanden ist, und Emulgatoren, vorzugsweise (C₁₀-C₁₂) Alkyldimethylaminoxid, wobei der pH-Wert im Bereich von 10 bis 13, bevorzugt von 11,5 bis 12 liegt. Als Spülflüssigkeit wird eine wässrige Lösung, bestehend aus Korrosionsinhibitoren, sowie Buntmetall-Deaktivatoren, vorzugsweise Benzotriazole eingesetzt, um einen langfristigen Korrosionsschutz zu bieten.

Um Verunreinigungen der Reinigungs- oder Spülflüssigkeit, die von dieser aus der zu reinigenden Leitung mitgenommen wurden, aus dem Flüssigkeitskreislauf während des Reinigungs- oder Spülbetriebs herauszufiltern, ist in die Einlassöffnung 28 des Behälters 26 ein entsprechender Filter 33 eingesetzt, der nach jedem Reinigungs- oder Spüldurchlauf gewechselt wird.

Im Folgenden wird die Durchführung des erfindungsgemäßen Verfahrens mit Hilfe der in Figur 1 dargestellten Reinigungsvorrichtung beschrieben.

Als erstes wird der Behälter 26 mit Reinigungsflüssigkeit gefüllt. Dann wird der Filter 33 in die Einlassöffnung 28 eingesetzt, woraufhin die Einlassöffnung 28 mit dem beispielsweise als Schraubdeckel ausgebildeten Deckel 29 verschlossen wird.

Als nächstes werden die als Vorlaufleitung und Rücklaufleitung dienenden Verbindungsleitungen 21 bzw. 31, die als flexible Leitungen, insbesondere als Schläuche ausgebildet sind, mit passenden Anschlüssen 22, 32 versehen, die den Anschlüssen 2' einer zu reinigenden Versorgungsleitung 2 entsprechen. Die Verbindungsleitungen 21, 31 können dann, nachdem die Anschlüsse 2' der Versorgungsleitung 2 vom Kompressor 1 bzw. vom Druckbehälter 3 oder einem anderen Element des Bremssystems gelöst wurden, verbunden werden.

Hierdurch wird ein offener Kreislauf vom Behälter 26 über das Filter 24, die Pumpe 10, den Mischer 14, die als Vorlaufleitung dienende Verbindungsleitung 21, die zu reinigende Leitung 2 und über die als Rücklaufleitung dienende Verbindungsleitung 31 zurück zum Behälter 26 gebildet, wie dies durch die Pfeile 34 dargestellt ist.

Nun wird die Pumpe eingeschaltet und die Reinigungsflüssigkeit wird mit einem Förderdruck von 0 bar bis 5 bar, vorzugsweise von 0,5 bar bis 2 bar in den Kreislauf gepumpt. Jetzt wird das Regelventil 17 des Druckreglers 16 geöffnet und auf einen Druck zwischen 0,5 bar und 2,0 bar, vorzugsweise zwischen 0,8 bar und 1,5 bar und insbesondere auf einen Druck von 0,9 bar bis maximal 1,3 bar eingestellt. Je nach Auslegung des Systems können aber auch höhere Drücke für die in die Flüssigkeit einzuleitende Luft gewählt werden. Schließlich wird die Reinigungsflüssigkeit aus dem Behälter 26 über eine vorbestimmte Zeitdauer kontinuierlich durch den Flüssigkeitskreislauf gepumpt, wobei in der zu reinigenden Versorgungsleitung 2 vorhandene Verunreinigungen von den Wänden chemisch und mechanisch gelöst werden. Das mechanische Lösen von Verunreinigungen erfolgt dabei durch Störungen der Strömung aufgrund der in die Flüssigkeit eingeleiteten Luft, die zu Kavitationsschlägen führen, welche bei Einwirkung auf die Verunreinigungen diese von den Wänden der zu reinigenden Leitung lösen.

Nach Ablauf der vorbestimmten Zeit, also nach einer Zeit von etwa 30 bis 60 Minuten wird die Pumpe 10 ausgeschaltet, während die Druckluft vom Druckregler 16 weiterhin in die Vorlaufleitung 21 eingeleitet wird und so die in den Verbindungsleitungen 21, 31 und der zu reinigenden Leitung 2 verbliebene Flüssigkeit austreibt. Sobald die gesamte Flüssigkeit aus den Leitungen geblasen wurde, wird auch das Druckregelventil 17 geschlossen und die Druckluftzufuhr damit abgeschaltet. Damit ist der eigentliche Reinigungsbetrieb beendet.

Die verbrauchte Reinigungsflüssigkeit im Behälter 26 wird nun über den Hahn 27 abgelassen und über einer Abwasseranlage mit Ölabscheider entsorgt.

Die erfindungsgemäße Vorrichtung ist nun grundsätzlich für die Reinigung einer weiteren Leitung bereit.

Vorteilhafterweise bleibt die soeben gereinigte Leitung 2 jedoch weiterhin mit der erfindungsgemäßen Vorrichtung verbunden, um nach dem Reinigungsbetrieb einen Spülbetrieb durchzuführen, der im Wesentlichen in der gleichen Weise abläuft wie der Reinigungsbetrieb.

Es wird also zunächst ein neuer Filter 33 in die Einlassöffnung 28 des Behälters 26 eingesetzt, so dass dann Spülflüssigkeit eingefüllt werden kann. Nach dem Schließen der Einlassöffnung 28 mittels des Deckels 29, an dem immer noch die Rücklaufleitung 31 angebracht ist, wird wiederum die Pumpe gestartet, die nun Spülflüssigkeit durch den beschriebenen Kreislauf für eine vorbestimmte Zeit von mindestens 30 Minuten pumpt. Daraufhin wird wie beim Reinigungsbetrieb die Druckluftzufuhr geöffnet und auf einen Wert von maximal 1 bar eingestellt. Auch beim Spülen wird also die Strömung der Spülflüssigkeit durch die eingeleitete Druckluft gestört, sodass es zu einer mechanischen Beaufschlagung der Innenwände der zu reinigenden oder besser gesagt nunmehr zu spülenden Leitung 2 durch die Spülflüssigkeit kommt.

Nach Beendigung des Spülbetriebs wird wiederum die Pumpe abgeschaltet, so dass keine weitere Spülflüssigkeit nachgefördert wird und die Druckluft nun die gesamte restliche Reinigungsflüssigkeit aus den Leitungen blasen kann.

Sobald der Spülbetrieb beendet ist, werden die Anschlüsse 22, 32 der Verbindungsleitungen 21, 31 von den Anschlüssen 2' der nun gereinigten Leitung 2 abmontiert und die Leitung 2 wird mit ihrem entsprechenden Anschluss 2' am Kompressor 1 wieder angeschlossen. Der andere Anschluss der Leitung bleibt offen. Nun kann der Fahrzeugmotor gestartet und für beispielsweise mindestens 5 Minuten laufen gelassen werden, um eventuell doch noch verbliebene Flüssigkeit durch die vom Kompressor gelieferte warme Druckluft aus der Leitung 2 auszublasen.

## Patentansprüche

1. Verfahren zum Reinigen von Leitungen, insbesondere von Versorgungsleitungen in Druckluft-Bremssystemen, bei dem eine Reinigungsflüssigkeit durch die zu reinigende Leitung (2) gepumpt wird, wobei der zu der zu reinigenden Leitung (2) strömenden Reinigungsflüssigkeit Luft zugeführt wird.

2. Verfahren nach Anspruch 1, **dadurch gekennzeichnet, dass** die Reinigungsflüssigkeit mit einem Förderdruck von 0 bis 5 bar, vorzugsweise von 0,5 bis 2 bar durch die zu reinigende Leitung (2) gepumpt wird.

3. Verfahren nach Anspruch 1 oder 2, **dadurch gekennzeichnet, dass** die Luft mit einem Druck von 0,5 bis 2,0 bar, vorzugsweise 0,8 bis 1,5 bar, insbesondere 0,9 bis 1,3 bar in die strömende Flüssigkeit eingeleitet wird.

4. Verfahren nach Anspruch 1, 2 oder 3, **dadurch gekennzeichnet, dass** am Ende eines Reinigungsbetriebs die Reinigungsflüssigkeit mit Druckluft aus der zu reinigenden Leitung (2) geblasen wird, und dass anschließend zum Spülen der zu reinigenden Leitung (2) eine Spülflüssigkeit in im Wesentlichen gleicher Weise wie die Reinigungsflüssigkeit durch die zu reinigende Leitung (2) gepumpt wird.

5. Verfahren nach einem der vorstehenden Ansprüche, **dadurch gekennzeichnet, dass** als Reinigungsflüssigkeit eine nicht brennbare, wässrige, aschefreie Flüssigkeit verwendet wird, die schmutzlösende und emulgierende Eigenschaften hat.

6. Verfahren nach einem der vorstehenden Ansprüche, **dadurch gekennzeichnet, dass** als Spülflüssigkeit eine wässrige Lösung aus Korrosionsinhibitoren sowie Buntmetall-Deaktivatoren, vorzugsweise Benzotriazole eingesetzt wird.

7. Verfahren nach einem der vorstehenden Ansprüche, **dadurch gekennzeichnet, dass** zunächst einlass- und auslassseitige Anschlüsse (2') der zu reinigenden Versorgungsleitung (2) eines Druckluftbremssystems gelöst werden, dass die Anschlüsse (2') der zu reinigenden Versorgungsleitung (2) dann mit einer Vorlaufleitung (21) und einer Rücklaufleitung (31) verbunden werden, durch die dann Reinigungsflüssigkeit oder Spülflüssigkeit zu bzw. von der zu reinigenden Versorgungsleitung (2) zugeführt bzw. abgeführt werden.

8. Verfahren nach Anspruch 7, **dadurch gekennzeichnet, dass** nach Beendigung des Reinigungs- oder gegebenenfalls des Spülbetriebs die Versorgungsleitung (2) mit ihrem einlassseitigen Anschluss (2') wieder an einem Kompressor (1) des Bremssystems angeschlossen wird, während der auslassseitige Anschluss (2') offen bleibt, um die Versorgungsleitung (2) abschließend mit Druckluft zu spülen.

9. Vorrichtung zum Reinigen von Leitungen, insbesondere von Versorgungsleitungen in Druckluftbremssystemen, mit einer Pumpe (10) für Reinigungsflüssigkeit und einem Mischer (14) zum Einleiten von Luft in Reinigungsflüssigkeit, dessen erster Einlass (12) mit der Förderseite (11) der Pumpe (10) verbunden ist und dessen zweiter Einlass (15) mit einer Druckluftquelle (19) verbindbar ist, während sein Auslass (20) über eine Anschlussleitung (21) mit einer zu reinigenden Leitung (2) verbindbar ist.

10. Vorrichtung nach Anspruch 9, **dadurch gekennzeichnet, dass** der zweite Einlass (15) des Mischers (14) über einen Druckregler (16) mit der Druckluftquelle (19) verbindbar ist.

11. Vorrichtung nach Anspruch 9 oder 10, **dadurch gekennzeichnet, dass** die Saugseite (23) der Pumpe (10) mit einem Auslass (25) eines Behälters (26) für Reinigungs- oder Spülflüssigkeit verbunden ist, dessen Einlass (28) über eine Rücklaufleitung (31) mit der zu reinigenden Leitung (2) verbindbar ist, um einen Kreislauf (34) für Reinigungsflüssigkeit zu bilden.

## Geänderte Patentansprüche

### Geänderte Patentansprüche gemäss Regel 137(2) EPÜ.

**1.** Verfahren zum Reinigen von Leitungen, insbesondere von Versorgungsleitungen in Druckluft-Bremssystemen, bei dem eine Reinigungsflüssigkeit mit einem Förderdruck von 0 bis 5 bar durch die zu reinigende Leitung (2) gepumpt wird, wobei der zu der zu reinigenden Leitung (2) strömenden Reinigungsflüssigkeit Luft mit einem Druck von 0,5 bis 2,0 bar zugeführt wird.

**2.** Verfahren nach Anspruch 1, **dadurch gekennzeichnet, dass** die Reinigungsflüssigkeit mit einem Förderdruck von 0,5 bis 2 bar durch die zu reinigende Leitung (2) gepumpt wird.

**3.** Verfahren nach Anspruch 1 oder 2, **dadurch gekennzeichnet, dass** die Luft mit einem Druck von 0,8 bis 1,5 bar, insbesondere 0,9 bis 1,3 bar in die strömende Flüssigkeit eingeleitet wird.

**4.** Verfahren nach Anspruch 1, 2 oder 3, **dadurch gekennzeichnet, dass** am Ende eines Reinigungsbetriebs die Reinigungsflüssigkeit mit Druckluft aus der zu reinigenden Leitung (2) geblasen wird, und dass anschließend zum Spülen der zu reinigenden Leitung (2) eine Spülflüssigkeit in im Wesentlichen gleicher Weise wie die Reinigungsflüssigkeit durch die zu reinigende Leitung (2) gepumpt wird.

**5.** Verfahren nach einem der vorstehenden Ansprüche, **dadurch gekennzeichnet, dass** als Reinigungsflüssigkeit eine nicht brennbare, wässrige, aschefreie Flüssigkeit verwendet wird, die schmutzlösende und emulgierende Eigenschaften hat.

**6.** Verfahren nach einem der vorstehenden Ansprüche, **dadurch gekennzeichnet, dass** als Spülflüssigkeit eine wässrige Lösung aus Korrosionsinhibitoren sowie Buntmetall-Deaktivatoren, vorzugsweise Benzotriazole eingesetzt wird.

**7.** Verfahren nach einem der vorstehenden Ansprüche, **dadurch gekennzeichnet, dass** zunächst einlass- und auslassseitige Anschlüsse (2') der zu reinigenden Versorgungsleitung (2) eines Druckluftbremssystems gelöst werden, dass die Anschlüsse (2') der zu reinigenden Versorgungsleitung (2) dann mit einer Vorlaufleitung (21) und einer Rücklaufleitung (31) verbunden werden, durch die dann Reinigungsflüssigkeit oder Spülflüssigkeit zu bzw. von der zu reinigenden Versorgungsleitung (2) zugeführt bzw. abgeführt werden.

**8.** Verfahren nach Anspruch 7, **dadurch gekennzeichnet, dass** nach Beendigung des Reinigungs- oder gegebenenfalls des Spülbetriebs die Versorgungsleitung (2) mit ihrem einlassseitigen Anschluss (2') wieder an einem Kompressor (1) des Bremssystems angeschlossen wird, während der auslassseitige Anschluss (2') offen bleibt, um die Versorgungsleitung (2) abschließend mit Druckluft zu spülen.

**9.** Vorrichtung zur Durchführung eines Verfahrens zum Reinigen von Leitungen, insbesondere von Versorgungsleitungen in Druckluftbremssystemen nach einem der vorstehenden Ansprüche, mit einer Pumpe (10) für Reinigungsflüssigkeit und einem Mischer (14) zum Einleiten von Luft in Reinigungsflüssigkeit, dessen erster Einlass (12) mit der Förderseite (11) der Pumpe (10) verbunden ist und dessen zweiter Einlass (15) über einen Druckregler (16) mit einer Druckluftquelle (19) verbindbar ist, während sein Auslass (20) über eine Anschlussleitung (21) mit einer zu reinigenden Leitung (2) verbindbar ist.

**10.** Vorrichtung nach Anspruch 9, **dadurch gekennzeichnet, dass** die Saugseite (23) der Pumpe (10) mit einem Auslass (25) eines Behälters (26) für Reinigungs- oder Spülflüssigkeit verbunden ist, dessen Einlass (28) über eine Rücklaufleitung (31) mit der zu reinigenden Leitung (2) verbindbar ist, um einen Kreislauf (34) für Reinigungsflüssigkeit zu bilden.
